Europäisches Patentamt

European Patent Office

Office européen des brevets

(19)

(11) Veröffentlichungsnummer: **0 473 891 A2**

# EUROPÄISCHE PATENTANMELDUNG

(12)

(21) Anmeldenummer: **91110037.8**

(22) Anmeldetag: **19.06.91**

(51) Int. Cl.⁵: **B29C 45/72**, B29C 45/78

(30) Priorität: **01.09.90 DE 4027791**

(43) Veröffentlichungstag der Anmeldung:
**11.03.92 Patentblatt 92/11**

(84) Benannte Vertragsstaaten:
**AT CH DE ES FR GB IT LI NL**

(71) Anmelder: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr.**
**Patentanwälte Dr. Mayer & Frank Westliche 24**
**W-7530 Pforzheim(DE)**

(54) Vorrichtung zum Konstanthalten der Temperatur in einer Kunststoff-Spritzgiessmaschine.

(57) Zulaufkanal und Ablaufkanal der Vorrichtung sind durch Formstücke gebildet, welche je einen das Drehventil für den jeweiligen Kühlkreislauf aufnehmenden Ventilkanal aufweisen. Auf die Formstücke ist wahlweise das Motor-Getriebe-Gehäuse (15) eine motorischen Drehantriebes oder das Getriebegehäuse (64) eines manuellen Drehantriebes aufsetzbar. An wenigstens einem Formstück ist bedarfsweise wenigstens ein Kontrollorgan in Gestalt eines Temperaturanzeigegerätes (72) oder eines Meßrohres (73) zwischen dem Anschlußstutzen des Formstückes und dem Schlauchnippel (37) formschlüssig einfügbar.

FIG. 1

EP 0 473 891 A2

Die Erfindung betrifft eine Vorrichtung entsprechend dem Oberbegriff des Patentanspruches 1. Bei einer bekannten Vorrichtung dieser Art (US-PS 3,974,857) sind die Kühlkreisläufe für eine manuelle Steuerung ausgelegt. Zulaufkanal und Ablaufkanal der Vorrichtung sind durch die als Distanzelemente wirkenden Meßrohre voneinander getrennt und je mittels gesonderter Formstücke aufgebaut.

Eine bekannte, vergleichbare Vorrichtung ist ausschließlich für geregelte Kühlkreiläufe ausgelegt, ohne daß die unterschiedlichen Ansprüche an die Präzision der Kühlung in unterschiedlichen Temperaturzonen der Kunststoff-Spritzgießmaschine berücksichtigt wären (DE 36 36 635 C2).

Der Erfindung liegt die Aufgabe zugrunde, eine Vorrichtung der eingangs genannten Gattung derart weiterzubilden, daß bei Kunststoff-Spritzgießmaschinen unterschiedlicher Automationsstufen jeweils gerade die erforderliche Kühlpräzision derart realisierbar ist, daß der Kaufinteressent sich die für seine spezifischen Spritzerfordernisse und seine finanziellen Möglichkeiten günstigste Problemlösung für die Kühlung auswählen kann, ohne daß die diesbezüglichen Wettbewerbsvorteile durch unangemessen erhöhte Kosten beim Hersteller in Frage gestellt wären.

Diese Aufgabe wird durch eine Vorrichtung mit den Merkmalen des Patentanspruchs 1 gelöst.

Durch eine solche Lösung wird nicht nur beim Erwerb, sondern auch für künftige Entwicklungen eine bislang unerreichte Anpassung an die spezifischen Bedürfnisse des Kunden erreicht, indem dieser später für höhere Qualitäts- und/oder Automationsansprüche oder für einen höheren Bedienungskomfort nachrüsten kann. Je nachdem, welche Abweichungen von der Soll-Temperatur in den verschiedenen kritischen Temperaturzonen der Spritzgießmaschine tolerierbar sind, können mehr oder weniger Kühlkreisläufe mit einem motorisch angetriebenen, geregelten Drehventil versehen sein. Im Bereich der manuell kontrollierten Kühlkreisläufe sind folgende Varianten möglich:

a) Kühlkreisläufe ohne jede Kontrolleinrichtung für geringste Präzisionsansprüche an die Kühlung. Der Kühlstrom im Kühlkreis lauf wird bei Betriebsbeginn auf einen zuvor ermittelten empirischen Wert eingestellt.

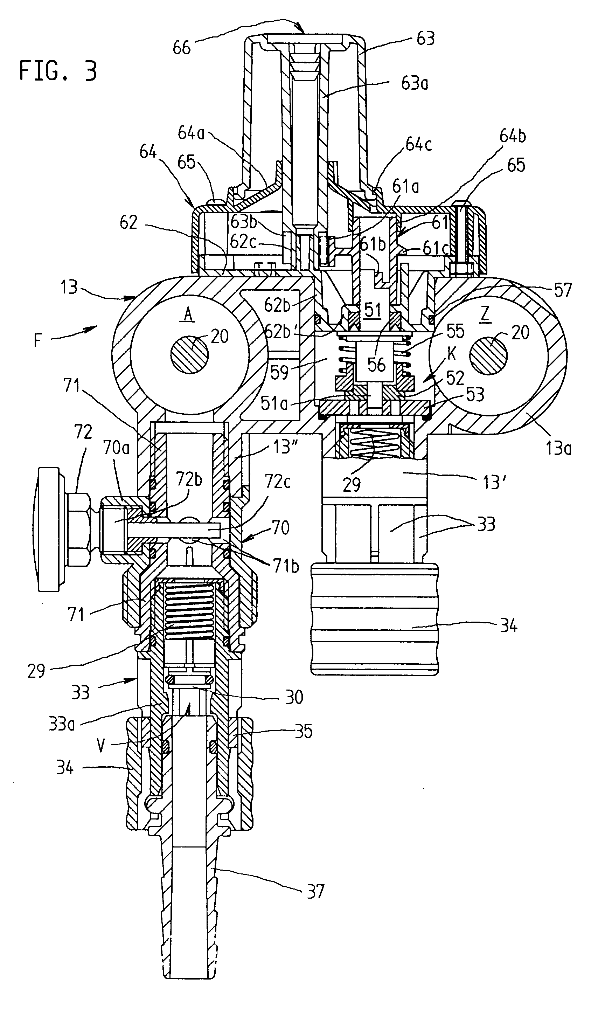

b) Als Kontrollorgan ist lediglich ein Temperaturanzeigegerät vorgesehen (Fig. 3).

c) Als Kontrollorgan ist lediglich ein Meßrohr vorgesehen.

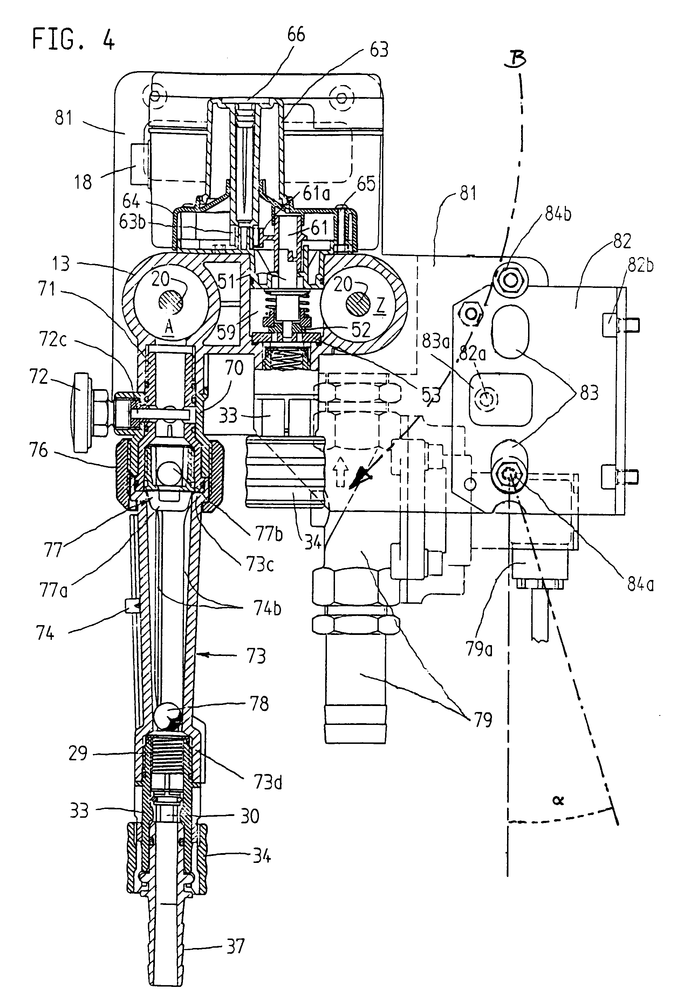

d) Als Kontrollorgane sind ein Temperaturanzeigegerät und ein Meßrohr vorgesehen (Fig. 4).

Die Fertigungskosten beim Hersteller können unter anderem deshalb besonders niedrig gehalten werden, weil ein Großteil der für die Realisierung der Kühlkreisläufe erforderlichen, im Spritzgießverfahren aus Kunststoff hergestellten Formteile sowohl bei den Kühlkreisläufen für manuelle Kontrolle als auch bei den geregelten Kühlkreisläufen verwendbar sind. Aus diesem Grunde ist auch die Umwandlung der Vorrichtung für sich wandelnde Kühlbedürfnisse mit einem relativ geringen Montageaufwand verbunden. Die immer wieder erforderliche Reinigung der Meßrohre ist im Gegensatz zu der Reinigung bei früheren Systemen, in welchen die Meßrohre zwischen dem Zulauf- und Ablaufkanal angeordnet waren, einfach durchzuführen. Denn die Meßrohre können mit ihren zugehörigen Schlauchnippeln durch bloßes Abschrauben der verbindenden Überwurfmutter von der Vorrichtung zwecks Reinigung abgenommen werden. Die Variante c) unterscheidet sich von der Variante d) lediglich dadurch, daß das Temperaturanzeigegerät fehlt und die Adaptermuffe sowie die Trägermuffe lediglich Adaptions- und Anschlußfunktionen haben.

Nachstehend wird die Erfindung anhand der Zeichnung beschrieben.

Es zeigen:

Fig. 1      Die als bauliche Einheit ausgebildete Vorrichtung in perspektivischer Darstellung,

Fig. 2,3,4      je einen teilweisen Vertikalschnitt durch die Einheit im Bereich eines manuell gesteuerten Kühlkreislaufes, wobei die Anordnung gemäß Fig. 3 mit einem Temperatur anzeigegerät und die Anordnung gemäß Fig. 4 mit einem Temperaturanzeigegerät und einem Meßrohr versehen ist,

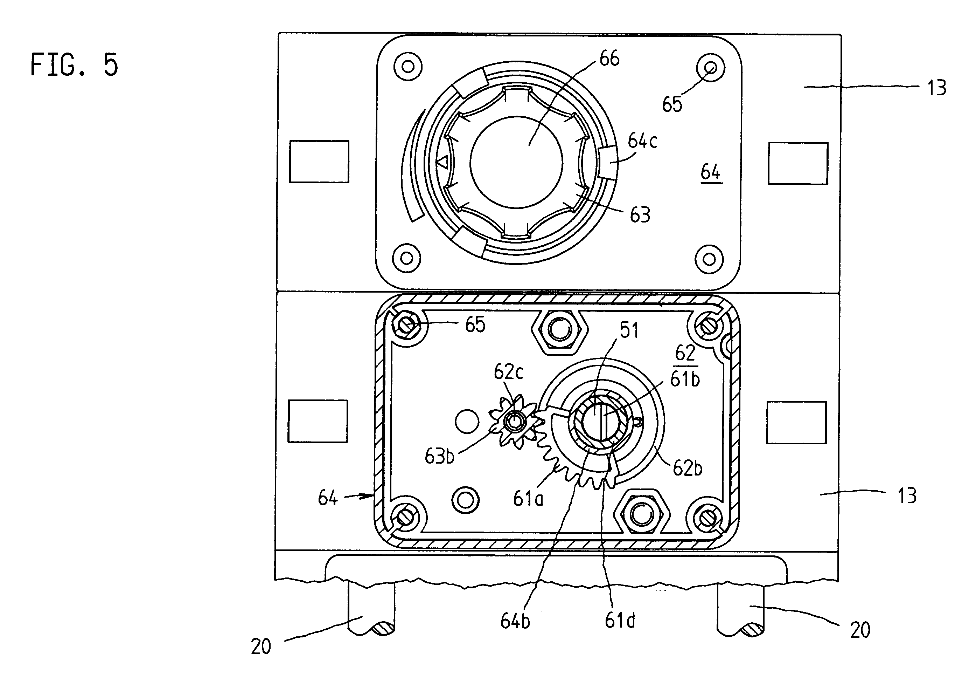

Fig. 5      einen Schnitt nach Linie V-V von Fig. 2 und

Fig. 6      einen teilweisen Vertikalschnitt durch die Einheit im Bereich eines geregelten Kühlkreislaufes.

Die Vorrichtung dient zur Konstanthaltung der Temperatur in funktionell kritischen Temperaturzonen einer Kunststoff-Spritzgießmaschine mittels einer Vielzahl von Kühlkreisläufen. Die Kühlkreisläufe zweigen je von einem gemeinsamen Zulaufkanal Z ab und münden in einen gemeinsamen Ablaufkanal A. Zulaufkanal Z und Ablaufkanal A sind durch formschlüssig aneinandergereihte Formstücke F aus Kunststoff gebildet. Jedes Formstück F hat sowohl an der Bildung des Zulaufkanals als auch an der Bildung des Ablaufkanals teil, indem es einen Kanalabschnitt 13a für den Zulaufkanal Z und einen Kanalabschnitt 13 für den Ablaufkanal A bildet. In jedes Formstück F ist zwischen den beiden Kanalabschnitten, die am Zulaufkanal Z und am Ablaufkanal A teilhaben, je ein senkrecht zu den genannten Kanälen stehender Ventilkanal 59 eingeformt. Im Ventilkanal 59 ist das den jeweiligen Kühlkreislauf beherrschende Drehventil K angeordnet. An jedes Formstück sind zwei Anschlußstutzen 13'',13' angeformt. Der eine Anschlußstutzen 13'' geht radial

2

vom Ablaufkanal A ab. Der andere Anschlußstutzen 13' liegt koaxial zum Ventilkanal 59 und verläuft parallel zum erstgenannten Anschlußstutzen 13''. Die Formstücke F der baulichen Einheit sind durch Zuganker 20 aus Edelstahl miteinander axial verspannt, die koaxial im Zuflußkanal Z bzw. Abschlußkanal A angeordnet sind.

Das Drehventil K umfaßt eine keramische Ventilsitz-Scheibe 53 und eine an dieser unter ständigem Druck anliegende keramische Ventilkörper-Scheibe 52. Diese ist über die mit Mitnehmerprofil 51a versehene Antriebsachse 51 motorisch oder manuell antreibbar. Der ständige Anlagedruck der Ventilsitz-Scheibe 53 wird mit Hilfe einer vorgespannten Schraubenfeder 55 erzeugt, welche die Antriebsachse 51 umschließt.

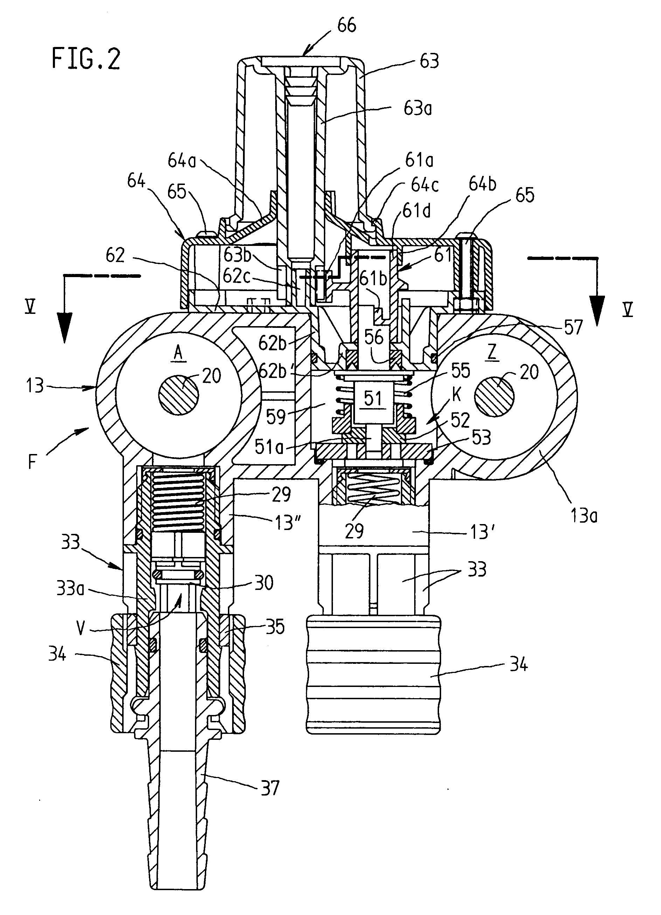

Auf die Formstücke F ist wahlweise das Getriebegehäuse 15 eines motorischen Drehantriebes oder das Getriebegehäuse (Lagerplatte 62 und Deckel 64) eines manuellen Drehantriebes aufsetzbar. Bei wenigstens einem Formstück F mit manuellem Drehantrieb ist bedarfsweise wenigstens ein Kontrollorgan zwischen dem Anschlußstutzen 13'' und einem Schlauchnippel 37 formschlüssig einfügbar. Der Schlauchnippel 37 ist an eine Anschlußmuffe 33 ankuppelbar. Die aus angekuppeltem Schlauchnippel und Anschlußmuffe 33 bestehende Einheit ist in Fig. 2 mittels der Anschlußmuffe 33 unmittelbar mit dem Anschlußstutzen 13'' verschraubt. Im Beispiel der Fig. 3 ist die aus angekuppeltem Schlauchnippel 37 und Anschlußmuffe 33 bestehende Einheit mit einer Adaptermuffe 71 verschraubt, welche ein Temperaturanzeigegerät 72 trägt und ihrerseits mit dem Anschlußstutzen 13''' verschraubt ist.

Im Beispiel der Fig. 4 ist die Anschlußmuffe 33 mit dem angekuppelten Schlauchnippel 37 mit einem mit der Adaptermuffe 71 verschraubten Meßrohr 73 verschraubt. Das Meßrohr 73 mit einem unteren Anschlußflansch 73d ist seinerseits im Bereich eines oberen Anschlußflansches 73c mittels einer Überwurfmutter 76 mit der Adaptermuffe 71 verschraubt. In der Adaptermuffe 71 ist ein Rückschlagventil 77 angeordnet. Das Temperaturanzeigegerät 72 mit Einschraubteil 72b weist einen linearen Meßfühler 72c auf und ist in der radialen Anformung 70a einer Trägermuffe 70 gehalten, welche die Adaptermuffe 71 umschließt. Die Trägermuffe 70 ist zwischen einer Schulter des Anschlußstutzens 13'' und einer Radialschulter der Adaptermuffe 71 axial festgelegt. Letztere weist zwei senkrecht zueinander stehende Radialbohrungen 71b zur wahlweisen Benutzung für die Aufnahme des Meßfühlers 72c in unterschiedlichen Einschraubpositionen auf.

Die Anschlußmuffe 33 ist mit einem bei Abnahme des Schlauchnippels 37 automatisch schließenden Ventil V versehen. Durch den mittels Spannzange 35 und Spannring 34 angekuppelten Schlauchnippel 37 ist der Ventilkörper 30 des genannten Ventils V entgegen der Wirkung einer Feder 29 im Abstand vom Ventilsitz 33a gehalten. In der als bauliche Einheit ausgebildeten Vorrichtung sind wenigstens zwei Kühlkreisläufe geregelt. Ihre Drehventile K arbeiten nach dem Programm eines in einem leeren Motor-Gebriebegehäuse 15' der Einheit untergebrachten Rechners im Zusammenwirken mit dem Rechner der Kunststoff-Spritzgießmaschine. Die Impulse des Rechners wirken auf den motorischen Antrieb der Drehventile ein.

Wenigstens zwei weitere Kühlkreisläufe der Einheit sind manuell gesteuert. Ihre Drehventile sind mittels eines Drehknopfes 63 betätigbar. Die die Kühlkreisläufe mit manueller Betätigung ihres Drehventils kontrollierende Bedienungsperson orientiert sich an Kontrollorganen dieser Kreisläufe, an denen Abweichungen der Temperatur vom Sollwert in den kritischen Temperaturzonen der Spritzgießmaschine erkennbar sind. Als solche Kontrollorgane sind an sich bekannte Temperaturanzeigegeräte 72 und bekannte Meßrohre 73 vorgesehen, welche je mit einem Markierungsreiter 74 versehen sind.

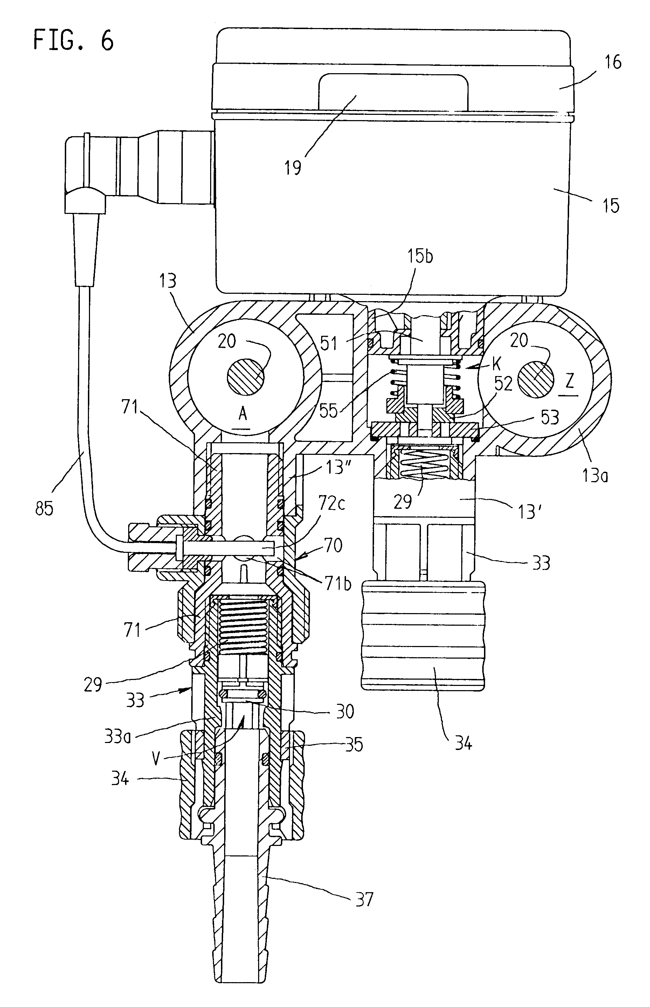

Bei den Formstücken F mit von Hand betätigtem Drehventil ist die Lagerplatte 62 des aus dieser Lagerplatte und einem Deckel 64 bestehenden Getriebegehäuses mit einer Anformung 62b versehen, welche zentrierend in den Ventilkanal 59 des zugehörigen Formstückes F eintaucht. Bei den Formstücken F mit motorisch angetriebenem Drehventil K taucht eine entsprechend gestaltete Anformung 15b (Fig. 6) des Motor-Getriebegehäuses 15 in den Ventilkanal 59 des Formstückes ein. Die Motor-Getriebegehäuse 15 sind durch Steckverbindungen 19 elektrisch miteinander verbunden. Mit 18 sind Steckbuchsen für den Anschluß der Temeraturfühlerleitungen bezeichnet. Die 'Ist'-Werte der Temperatur gelangen vom Meßfühler 72c über eine Leitung 85 zum Motor-Getriebegehäuse 15 (Fig. 6).

Der manuelle Antrieb für das Drehventil K umfaßt einen Drehknopf 63 mit zentralem Antriebszapfen 63a, der mittels Verschlußstopfen 66 abgedeckt ist. Der Drehknopf ist mit dem Deckel 64 des Getriebegehäuses mittels elastischer Rastzungen 64c verbunden. Der zentrale Antriebszapfen 63a ist im Deckel 64a drehgelagert und an einem Zapfen 62c der Lagerplatte 62 zentriert. Ein Ritzel 63b des Antriebszapfens 63a befindet sich im Eingriff mit einem Zahnsegment 61a einer mit der Antriebsachse 51 des Drehventils K mittels Kupplungsanformung 61b gekuppelten Antriebshülse 61. Diese ist am Deckel 64 mittels eines Zentrierlagers 64b zentriert und auf dem Boden 62b' der Anformung 62b abgestützt. Mit 56 und 57 sind Dichtringe bezeichnet. Der Deckel 64 ist mit dem Formstück F mittels der Befestigungselemente 65 lösbar verbunden.

Beim Kühlbetrieb gelangt das Kühlwasser über den Zulaufkanal Z in die Ventilkanäle 59 und von da

3

EP 0 473 891 A2

über die Keramikventile über die Anschlußstutzen 13'' in die jeweiligen Kühlkreisläufe. Nach Durchfluß des Kühlwassers durch die kritischen Temperaturzonen gelangt das erwärmte Kühlwasser über die Schlauchnippel 37 in die Kontrollorgane (Meßrohre 73, Temperaturanzeigegeräte 72 soweit vorhanden) und von da in den Abflußkanal A.

Die 'Ist'-Werte der Temperatur gelangen vom Meßfühler 72c über eine Verbindungsleitung 85 zum Motor-Getriebegehäuse 15 (Fig. 6).

Bei Abnahme eines Meßrohres 73, beispielsweise zu Reinigungszwecken, schließt das Rückschlagventil 77, indem eine als Ventilkörper wirkende Kugel 77b unter dem Einfluß des Druckes im Kühlwasser auf ihren im Ventilgehäuse 77a gebildeten Ventilsitz gedrückt wird.

Die Soll-Schwebehöhe des kugeligen Schwebekörpers 78 im Meßrohr 73 welche der für die gewünschte Soll-Temperatur entsprechende Fließgeschwindigkeit des Kühlwassers entspricht, ist durch einen Markierungsreiter 74 optisch darstellbar. Der Schwebekörper ist an inneren Rippen 74b des Meßrohres geführt (Fig. 4).

Mit 79 ist ein Absperrventil für die ganze Einheit bezeichnet, das als Magnetventil einen elektrischen Anschluß 79a aufweist.

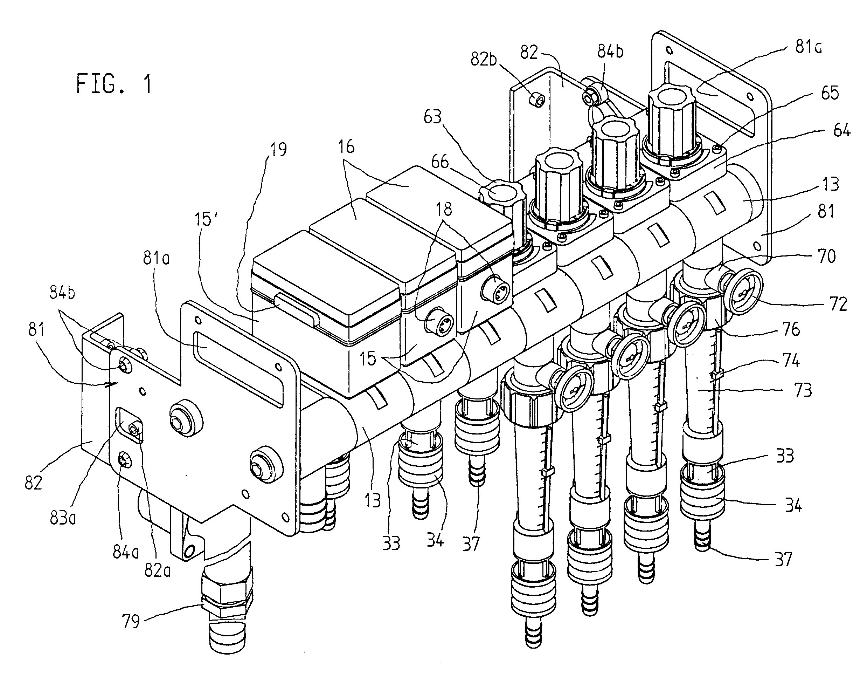

Wie insbesondere aus Fig. 1 ersichtlich, ist die bauliche Einheit auf beiden Stirnseiten mittels Platten 81 abgedeckt. Über diese Platten 81 ist die Einheit an Anschlußwinkeln 82 der Kunststoff-Spritzgießmaschine mittels Schrauben 82b befestigbar. Die Befestigung ist derart ausgelegt, daß die Einheit aus einer Normalposition entsprechend Fig. 1, in welcher die Meßrohre 73 vertikal verlaufen, um eine Drehlagerscheibe 84a in eine Position verschwenkbar ist, in welcher die Meßrohre 73 einen Winkel Alpha (Fig. 4) zur Vertikalen einschließen. Der Verschwenkungswinkel wird durch einen Anschlag 82a des Anschlußwinkels 82 in einer Ausnehmung 83a der Platte 81 begrenzt. In Normalposition ist die Einheit mit Hilfe einer Fixierschraube 84b fixiert, welche in eine Ausnehmung des Anschlußwinkels 82 eintaucht. Zur Aufhebung der Fixierung kann die ganze Einheit um eine durch die Langlöcher 83 des Anschlußwinkels 82 bestimmte Wegstrecke angehoben werden. In der um den Winkel Alpha verschwenkten Position der Einheit sind die hinteren Schlauchnippel 37 leichter an die hinteren Anschlußmuffen 33 ankuppelbar, weil die kuppelnde Hand dank der Schräglage der Einheit leichter von hinten über den Weg des Pfeiles B (Fig. 4), also zwischen der Kunststoffspritzgießmaschine und der Einheit, Zugriff zu den hinteren Spannringen 34 bekommt.

Mit 81a sind Ausschnitte in den Endstücken 81 bezeichnet, die zur Bildung von Handgriffen dienen.

4

Liste der Bezugszeichen (kein Bestandteil der Anmeldungsunterlagen)

| | | |
|---|---|---|
| F | Formstücke |
| K | Drehventile |
| V | Ventile in Anschlußmuffe 33 |
| A | Ablaufkanal |
| Z | Zulaufkanal |
| 13 | Kanalabschnitt in Ablaufkanal |
| 13a | Kanalabschnitt in Zulaufkanal |
| 13',13'' | Anschlußstutzen |
| 15 | Motor-Getriebegehäuse |
| 15' | leeres Motor-Getriebegehäuse für Rechner der Einheit |
| 15b | Anformung |
| 16 | Deckel |
| 18 | Steckbuchsen |
| 19 | Buchsen |
| 20 | Zuganker |
| 29 | Feder |
| 30 | Ventilkörper |
| 33 | Anschlußmuffe |
| 33a | Ventilsitz |
| 34 | Spannring |
| 35 | Spannzange |
| 37 | Schlauchnippel |
| 51 | Antriebsachse |
| 51a | Mitnahmeprofil |
| 52 | Ventilkörper-Scheibe |
| 53 | Ventilsitz-Scheibe |
| 55 | Schraubenfeder |
| 56,57 | Dichtringe |
| 59 | Ventilkanal |
| 61 | Antriebshülse |
| 61a | Zahnsagment |
| 61b | Kupplungsanformung |
| 62 | Lagerplatte |
| 62c | Zapfen |
| 62b | Anformung an 62 |
| 62b' | Boden |

EP 0 473 891 A2

| | |
|---|---|
| 63 | Drehknopf |
| 63a | Antriebszapfen |
| 63b | Ritzel |
| 64 | Deckel     64c Rastzungen |
| 64a | Bereich an 64 mit Drehlagerung |
| 65 | Befestigungselemente |
| 66 | Verschlußstopfen |
| 70 | Trägermuffe |
| 70a | radiale Anformung |
| 71 | Adaptermuffe |
| 71b | Radialbohrungen |
| 72 | Temperaturanzeigegerät |
| 72b | Einschraubteil |
| 72c | Meßfühler |
| 73 | Meßrohr |
| 73d | unterer Anschlußflansch |
| 74 | Markierungsreiter |
| 74b | innere Rippen |
| 76 | Überwurfmutter |
| 77 | Rückschlagventil |
| 77a | Ventilgehäuse |
| 77b | Kugel |
| 78 | Schwebekörper |
| 79 | Absperrventil |
| 79a | elektrischer Anschluß ; 80 Verbindungsleitung |
| 81 | Platten |
| 81a | Ausschnitt |
| 82 | Anschlußwinkel |
| 82a | Anschlag |
| 83 | Langlöcher |
| 82b | Befestigungsschrauben |
| 83a | Ausnehmung |
| 84a | Drehlagerscheibe |
| 84b | Fixierschraube |
| Alpha | Winkel |

**Patentansprüche**

1. Vorrichtung zum Konstanthalten der Temperatur in funktionell kritischen Temperaturzonen einer Kunststoff-Spritzgießmaschine mittels einer Vielzahl von Kühlkreisläufen, die je von einem gemeinsamen Kanal (Zulaufkanal Z) abzweigen und in einem gemeinsamen Kanal (Ablaufkanal A) münden, welche Kanäle durch formschlüssig aneinandergereihte Formstücke (F) mit Anschlußstutzen (13';13'') aufgebaut sind, an welche Anschlußstutzen (13';13'') Schlauchnippel (37) ankuppelbar sind, mit manuell betätigbaren Drehventilen (K) in den Kühlkreisläufen,

und mit Kontrolleinrichtungen (Temperaturanzeigegerät 72; Meßrohr 73) zur visuellen Erfassung der Temperatur und deren Abweichungen vom Sollwert in den Temperaturzonen, welche Kontrolleinrichtungen in die als bauliche Einheit ausgebildete Vorrichtung integriert sind,

dadurch gekennzeichnet, daß auf die Formstücke (F) die je am Aufbau beider Kanäle (Z;A) teilhaben und je einen senkrecht zu den Kanälen (Z;A) stehenden und das Drehventil (K) aufnehmenden Ventilkanal (59) zwischen Zulaufkanal (Z) und Ablaufkanal (A) aufweisen, wahlweise das Motor-Getriebegehäuse (15) eines motorischen Drehantriebes oder das Getriebegehäuse (Lagerplatte 62 und Deckel 64) eines manuellen Drehantriebes aufsetzbar ist, wobei an wenigstens einem Formstück (F) bedarfsweise wenigstens ein Kontrollorgan (Temperaturanzeigegerät 72; Meßrohr 73) zwischen dessen Anschlußstutzen (13'') und dem Schlauchnippel (37) formschlüssig einfügbar ist.

2. Vorrichtung nach Anspruch 1, dadurch gekennzeichnet, daß der an eine Anschlußmuffe (33) ankuppelbare Schlauchnippel (37) mittels der Anschlußmuffe (33) wahlweise

   unmittelbar mit dem Anschlußstutzen (13'' in Fig. 2) oder mit einer ein Temperaturanzeigegerät (72) tragenden und mit dem Anschlußstutzen (13''') verschraubten Adaptermuffe (71 in Fig. 3) oder mit einem mit der Adaptermuffe (71) verschraubten Meßrohr (73) verschraubbar ist (Fig. 4).

3. Vorrichtung nach Anspruch 2, dadurch gekennzeichnet, daß das Temperaturanzeigegerät (72) mit linearem Meßfühler (72c) in einer die Adaptermuffe (71) umschließenden Trägermuffe (70) radial aufgenommen und diese zwischen einer Schulter des Anschlußstutzens (13'') und einer Radialschulter der Adaptermuffe (71) axial festgelegt ist.

4. Vorrichtung nach Anspruch 2, dadurch gekennzeichnet, daß das mit einem Markierungsreiter (74) versehene Meßrohr (73) mittels einer Überwurfmutter (76) mit der Adaptermuffe (71) verschraubbar und in dieser ein Rückschlagventil (77) angeordnet ist (Fig. 4).

5. Vorrichtung nach einem der vorhergehenden Ansprüche, dadurch gekennzeichnet, daß die Lagerplatte (62) des Getriebegehäuses für den manuellen Antrieb und das Motor-Getriebegehäuse (15) für den motorischen Antrieb je mittels einer in den Ventilkanal (59) eintauchenden identischen Anformung (62b bzw. 15b) am Formstück (F) zentriert sind (Fig. 2,3;6), wobei der manuelle Antrieb einen mit dem Deckel (64) des Getriebegehäuses mittels elastischer Rastzungen (64c) verbindbaren Drehknopf (63) mit zentralem Antriebszapfen (63a) umfaßt, der mittels eines Ritzels (63b) mit dem Zahnsegment (61a) einer mit der Antriebswelle (51) des Drehventils (K) gekuppelten Antriebshülse (61) kämmt.

6. Vorrichtung nach einem der vorhergehenden Ansprüche, dadurch gekennzeichnet, daß die Adaptermuffe (71) zwei senkrecht zueinander stehende Radialbohrungen (71b) zur wahlweisen Benutzung für die Aufnahme des Meßfühlers (72c) in unterschiedlichen Einschraubpositionen der Adaptermuffe (71) aufweist.

7. Vorrichtung nach einem der vorhergehenden Ansprüche, dadurch gekennzeichnet, daß in den mit motorisch angetriebenen Drehventilen (K) versehenen Kühlkreisläufen anstelle des Temperaturmeßgerätes ein mit dem Rechner der Einheit verbundener Meßfühler (72c) vorgesehen ist und dieser Rechner in einem leeren Motor-Getriebegehäuse (15') aufgenommen ist, das eine mit dem Getriebegehäuse (15) für motorischen Antrieb identische Gestalt aufweist und wie dieses Motor-Getriebegehäuse (15) am Formstück (F) zentriert ist.

8. Vorrichtung nach einem der vorhergehenden Ansprüche, dadurch gekennzeichnet, daß die Einheit wenigstens zwei elektronisch geregelte Kühlkreisläufe mit motorischem Antrieb für das Drehventil (K) und wenigstens zwei Kühlkreisläufe mit manuellem Antrieb für das Drehventil (K) aufweist und daß als Drehventile (K) Keramikdrehventile Verwendung finden.

9. Vorrichtung nach einem der vorhergehenden Ansprüche, dadurch gekennzeichnet, daß sie als bauliche Einheit um Drehlagerscheiben (84a) (Fig. 4) aus einer Normalposition, in welcher die Anschlußmuffen (33) vertikal verlaufen, in eine Position verschwenkbar ist, in welcher die Anschlußmuffen (33) einen Winkel ($\alpha$) zur Vertikalen einschließen.

FIG. 1

FIG.2

FIG. 3

# FIG. 4

FIG. 5

FIG. 6